# EUROPÄISCHE PATENTSCHRIFT

(11) **EP 2 401 201 B1**
(45) Veröffentlichungstag und Bekanntmachung des Hinweises auf die Patenterteilung: **03.04.2013**
(21) Anmeldenummer: 10704518.9
(22) Anmeldetag: 18.02.2010
(51) Int. Cl.: B64D 13/00, B64F 1/36

(54) **SYSTEM UND VERFAHREN ZUR KÜHLUNG EINES FLUGZEUGBEREICHS UNTER EINSATZ EINES FLUGZEUGEXTERNEN LUFTAGGREGATS**
SYSTEM AND METHOD FOR COOLING AN AIRCRAFT ZONE BY UTILIZING AN AIRCRAFT-EXTERNAL AIR UNIT
SYSTEME ET PROCEDE DE REFROIDISSEMENT D'UNE ZONE D'AVION EN UTILISANT UNE UNITE D'AIR EXTERIEURE A L'AVION

(30) Priorität: 25.02.2009 DE 102009010546; 25.02.2009 US 208578 P
(43) Veröffentlichungstag der Anmeldung: 04.01.2012
(73) Patentinhaber: Airbus Operations GmbH, 21129 Hamburg (DE)
(72) Erfinder: KRAKOWSKI, Dariusz, 21614 Buxtehude (DE); GUMM, Stefan, 20257 Hamburg (DE); KELNHOFER, Jürgen, 21635 Jork (DE)
(74) Vertreter: Schicker, Silvia
(86) Internationale Anmeldenummer: PCT/EP2010/001033
(87) Internationale Veröffentlichungsnummer: WO 2010/097181

(56) Entgegenhaltungen:
- WO-A2-2009/156140
- WO-A2-2010/003640
- US-A- 4 517 813
- US-A- 4 835 977
- US-A1- 2004 231 350
- US-A1- 2007 235 587

## Beschreibung

Die vorliegende Erfindung betrifft ein System und ein Verfahren zur Kühlung eines Flugzeugbereichs, bei denen ein flugzeugexternes Luftaggregat zum Einsatz kommt.

Eine flugzeuginterne Klimaanlage benötigt für eine ordnungsgemäße Funktion hochverdichtete Prozessluft, die der Klimaanlage durch die Triebwerke oder das Hilfstriebwerk (Auxiliary Power Unit, APU) des Flugzeugs oder im Bodenbetrieb des Flugzeugs auch durch ein flugzeugexternes Hochdruck-Lufterzeugungsaggregat bereitgestellt wird. Wenn keines dieser Prozessluftversorgungssysteme verfügbar ist, kann die Flugzeugklimaanlage nicht betrieben werden. Darüber hinaus kann im Bodenbetrieb eines Flugzeugs, beispielsweise während länger andauernder Wartungsarbeiten, ein Betrieb der Flugzeugklimaanlage aus Kostengründen nicht erwünscht oder aus Sicherheitsgründen nicht möglich sein. Es ist daher üblich, Flugzeuge im Bodenbetrieb mit vorgekühlter Luft zu versorgen, die von einem flugzeugexternen Niederdruck-Lufterzeugungsaggregat bereitgestellt wird.

Niederdruck-Lufterzeugungsaggregate sind in unterschiedlichen Ausführungen und mit unterschiedlichen Kühlleistungen erhältlich. Die meisten derzeit eingesetzten Niederdruck-Lufterzeugungsaggregate stellen Kühlluft mit einer Temperatur von ca. +5°C bereit, wobei die erzeugte Kühlluftmenge sowie der Systemdruck und damit der Druck der Kühlluft jeweils von der Ausgestaltung der Niederdruck-Lufterzeugungsaggregate abhängen. Es existieren jedoch auch bereits Niederdruck-Lufterzeugungsaggregate, die in der Lage sind, Kühlluft mit einer Temperatur von unter 0°C zu erzeugen. Ein flugzeugexternes Niederdruck-Lufterzeugungsaggregat wird mit Hilfe von Verbindungsschläuchen an genormte flugzeugseitige Anschlüsse angeschlossen, so dass die von dem Niederdruck-Lufterzeugungsaggregat erzeugte Kühlluft in das Innere des Flugzeugs geführt werden kann. Dort wird die Kühlluft mit Hilfe flugzeuginterner Luftverteilungssysteme in die zu kühlenden Flugzeugbereiche, wie z.B. die Passagierzone, das Cockpit, die Frachträume oder verschiedene Einbauräume wärmeerzeugender, insbesondere elektronischer Komponenten des Flugzeugs geleitet. Erst vor dem Start der Flugzeugtriebwerke wird das flugzeugexterne Niederdruck-Lufterzeugungsaggregat wieder von dem Flugzeug getrennt und die Kühlung der zu kühlenden Flugzeugbereiche von der Flugzeugklimaanlage übernommen. Eine gegenwärtig eingesetzte Flugzeugklimaanlage umfasst eine in einem bedruckten Bereich des Flugzeugs angeordnete Mischkammer, der im Betrieb der Flugzeugklimaanlage von den Klimaaggregaten der Flugzeugklimaanlage sehr kalte Luft mit einer Temperatur von bis ca. -25°C und einem verhältnismäßig hohem Druck sowie warme Umluft mit einer Temperatur von ca. +30°C zugeführt wird. Die in der Mischkammer zur Einstellung einer gewünschten Temperatur gemischte Luft wird anschließend über diverse Luftverteilungsleitungen in die zu kühlenden Flugzeugbereiche geleitet. Zur Steuerung der Luftströmung innerhalb der Klimaanlage sind in die Klimaaggregate mit der Mischkammer verbindenden Leitungen jeweils entsprechende Rückschlagventile angeordnet, die verhindern, dass zur Zufuhr in die Mischkammer vorgesehene Umluft in die außerhalb des bedruckten Flugzeugbereichs angeordneten Klimaaggregate entweicht.

Wenn im Bodenbetrieb des Flugzeugs ein flugzeugexternes Niederdruck-Lufterzeugungsaggregat die Kühlung der zu kühlenden Flugzeugbereiche übernimmt, wird die von dem Niederdruck-Lufterzeugungsaggregat bereitgestellte Luft, über ein entsprechendes flugzeugseitiges Niederdruck-Luftverteilungssystem unmittelbar in die Mischkammer der Flugzeugklimaanlage geleitet. Das Niederdruck-Luftverteilungssystem umfasst eine Einlassleitung, die sich durch die unbedruckte Belly Fairing in den bedruckten Bereich des Flugzeugs in Richtung der Mischkammer erstreckt. Ein in der Einlassleitung in einem Übergangsbereich zwischen dem bedruckten und dem unbedruckten Bereich des Flugzeugs angeordnetes Rückschlagventil verhindert eine Rückströmung von Luft aus dem im bedruckten Bereich des Flugzeugs angeordneten Abschnitt der Einlassleitung in den sich durch den unbedruckten Flugzeugbereich erstreckenden Einlassleitungsabschnitt. Das Rückschlagventil verhindert somit, dass im Falle einer Leckage in dem im unberuckten Flugzeugbereich angeordneten Teil des Niederdruck-Luftverteilungssystems Luft aus dem bedruckten Bereich des Flugzeugs entweicht.

Bei derzeit bekannten Flugzeugkühlsystemen besteht das Problem, dass im Betrieb eines Kühlsystems unter Verwendung eines flugzeugexternen Luftaggregats kein Informationsaustausch hinsichtlich aktueller Betriebsparameter zwischen den flugzeugseitigen Komponenten des Kühlsystems und dem flugzeugexternen Luftaggregat stattfindet. Dies kann zu kritischen Betriebszuständen führen. Insbesondere besteht bei derzeit bekannten Flugzeugkühlsystemen beim Einsatz von Niederdruck-Lufterzeugungsaggregaten, die in der Lage sind, Kühlluft mit einer sehr tiefen Temperatur von unter 0°C zu erzeugen, ein erhebliches Risiko einer Vereisung der flugzeugseitigen Luftverteilungssysteme. Um einer durch Vereisung verursachten Beschädigung entgegenzuwirken, müssen vereisungsgefährdete Komponenten der flugzeugseitigen Luftverteilungssysteme, wie z.B. Ventile oder Klappen, stabiler ausgelegt, beheizt oder mit zusätzlichen, einen eventuellen Fehlbetrieb erfassenden Elektroniksystemen gekoppelt werden. Dies führt zu Mehrkosten sowie unerwünschtem Mehrgewicht. Darüber hinaus ist aufgrund des fehlenden Informationsaustauschs zwischen den flugzeugseitigen Komponenten des Kühlsystems und dem flugzeugexternen Luftaggregat keine optimierte Steuerung der von dem flugzeugexternen Luftaggregat bereitgestellten Kühlleistung möglich. Das flugzeugexterne Luftaggregat liefert somit in bestimmten Betriebsphasen des Kühlsystems unter Umständen eine zu hohe Kühlleistung. Dies wirkt sich negativ auf den Energieverbrauch des Kühlsystems aus.

Die US 2004/0231350 A1, die als nächstliegender Stand der Technik betrachtet wird, beschreibt eine Flugzeugklimaanlage mit zwei Klimaaggregaten sowie einem Mischer. In dem Mischer wird von den Klimaaggregaten erzeugte Klimatisationsluft mit Rezirkulationsluft gemischt, die von zwei Rezirkulationsgebläsen aus einer Flugzeugpassagierkabine abgeführt und in den Mischer gefördert wird.

Aus der US 4,835,977 ist ein flugzeugexternes Luftaggregat bekannt, das über einen Anschlussschlauch unmittelbar mit einem in einer Flugzeugkabine verlegten Rohrleitungssystem verbunden werden kann.

Aus der US 2007/0235587 A1 ist ein flugzeugexternes Luftaggregat bekannt, wobei ein den Betriebszustand eines Flugzeugs anzeigendes Signal über eine drahtlose Verbindung an das flugzeugexterne Luftaggregat übertragen wird.

Die vorliegenden Erfindung ist auf die Aufgabe gerichtet, ein System und ein Verfahren zur Kühlung eines Flugzeugbereichs anzugeben, die beim Einsatz eines flugzeugexternen Luftaggregats im Bodenbetrieb des Flugzeugs eine sichere und energieeffiziente Kühlung des zu kühlenden Flugzeugbereichs ermöglichen.

Diese Aufgabe wird durch ein System zur Kühlung eines Flugzeugbereichs mit den Merkmalen des Anspruchs 1 sowie ein Verfahren zur Kühlung eines Flugzeugbereichs mit den Merkmalen des Anspruchs 9 gelöst.

Ein erfindungsgemäßes System zur Kühlung eines Flugzeugbereichs umfasst eine Mischkammer, die mit einem Klimaaggregat zur Bereitstellung von kühler Luft und/oder einer Umluftfördereinrichtung zur Zufuhr von Umluft in die Mischkammer verbunden ist. Der mit Hilfe des erfindungsgemäßen Kühlsystems zu kühlende Flugzeugbereich kann eine Passagierzone, ein Cockpit oder ein Frachtraum sein. Darüber hinaus kann mit Hilfe des erfindungsgemäßen Kühlsystems auch ein Einbauraum einer wärmebelasteten Komponente an Bord des Flugzeugs, wie z.B. eines Elektroniksystems gekühlt werden. Vorzugsweise ist das Klimaaggregat in einem unbedruckten Bereich des Flugzeugs angeordnet und dazu eingerichtet, Luft mit einer Temperatur von ca. -25°C bereitzustellen. Die Umluftfördereinrichtung kann beispielsweise in Form eines Gebläses ausgebildet sein und dient dazu, Rezirkulationsluft aus dem zu kühlenden Flugzeugbereich, beispielsweise einer Passagierkabine, in die Mischkammer des Kühlsystems zurückzuführen. Die von der Umluftfördereinrichtung in die Mischkammer geförderte Rezirkulationsluft hat vorzugsweise eine Temperatur von ca. +30°C. In der Mischkammer erfolgt eine Vermischung mit der von dem Klimaaggregat bereitgestellten kühlen Luft. Falls gewünscht oder erforderlich, kann das erfindungsgemäße Kühlsystem lediglich ein Klimaaggregat und lediglich eine Umluftfördereinrichtung umfassen. Vorzugsweise umfasst das System jedoch zwei oder mehr Klimaaggregate und zwei oder mehr Umluftfördereinrichtungen. Die Umluftfördereinrichtung und die Mischkammer des erfindungsgemäßen Kühlsystems sind vorzugsweise zur Anordnung in einem bedruckten Bereich des Flugzeugs vorgesehen.

Das erfindungsgemäße System zur Kühlung eines Flugzeugbereichs umfasst ferner ein flugzeugseitiges Luftverteilungssystem, das mindestens eine die Mischkammer mit dem zu kühlenden Flugzeugbereich verbindende Leitung sowie mindestens eine Leitung umfasst, die mit einem flugzeugexternen Lufterzeugungsaggregat verbindbar ist, um von dem flugzeugexternen Lufterzeugungsaggregat bereitgestellte Luft in das flugzeugseitige Luftverteilungssystem zu leiten. Das erfindungsgemäße Kühlsystem kann zur Verbindung mit einem beliebigen flugzeugexternen Lufterzeugungsaggregat vorgesehen sein. Beispielsweise kann das System dazu eingerichtet sein, mit einem herkömmlichen Niederdruck-Lufterzeugungsaggregat verbunden zu werden, das Luft mit einer Temperatur von ca. +5°C erzeugt. Vorzugsweise ist das erfindungsgemäße Kühlsystem jedoch dazu vorgesehen, mit einem flugzeugexternen Niederdruck-Lufterzeugungsaggregat verbunden zu werden, das dazu in der Lage ist, Kühlluft mit einer sehr tiefen Temperatur von unter 0°C zu erzeugen.

Das erfindungsgemäße System zur Kühlung eines Flugzeugbereichs umfasst ferner eine Erfassungseinrichtung zur Erfassung eines einen Betriebszustand in dem flugzeugseitigen Luftverteilungssystem und/oder in der Mischkammer anzeigenden Parameters. Eine Steuereinheit des erfindungsgemäßen Kühlsystems ist dazu eingerichtet, von der Erfassungseinrichtung bereitgestellte Signale zu empfangen und auszuwerten und, wenn das erfindungsgemäße Kühlsystem mit dem flugzeugexternen Lufterzeugungsaggregat verbunden ist, den Betrieb des flugzeugexternen Lufterzeugungsaggregats in Abhängigkeit der von der Erfassungseinrichtung bereitgestellten Signale zu steuern. Mit anderen Worten, die Steuereinheit des erfindungsgemäßen Kühlsystems ermöglicht die Steuerung des Betriebs des flugzeugexternen Lufterzeugungsaggregats unmittelbar in Abhängigkeit des Betriebszustands in dem flugzeugseitigen Luftverteilungssystem und/oder in der Mischkammer.

Durch die Überwachung des Betriebszustands in dem flugzeugseitigen Luftverteilungssystem und/oder in der Mischkammer und die entsprechende Anpassung des Betriebs des flugzeugexternen Lufterzeugungsaggregats können kritische Betriebszustände in dem flugzeugseitigen Luftverteilungssystem und/oder in der Mischkammer, wie z.B. Vereisungen in diesen Bereichen des Kühlsystems entweder ganz vermieden, zumindest aber frühzeitig erkannt und durch entsprechende Steuerung des Betriebs des flugzeugexternen Lufterzeugungsaggregats wieder beseitigt werden. Das erfindungsgemäße Kühlsystem ist daher im Zusammenhang mit einem flugzeugexternen Lufterzeugungsaggregat, das Luft mit einer Temperatur von unter 0°C bereitstellt, besonders sicher betreibbar. Darüber hinaus ermöglicht das erfindungsgemäße Kühlsystem eine Anpassung der von dem flugzeugexternen Lufterzeugungsaggregat bereitgestellten Kühlleistung an den Kühlleistungsbedarf des Kühlsystems. Betriebszustände, in denen das flugzeugexterne Lufterzeugungsaggregat nicht benötigte Kühlleistung erzeugt, können damit vermieden und das flugzeugexterne Lufterzeugungsaggregat folglich energieeffizienter betrieben werden.

Vorzugsweise ist die Steuereinheit des erfindungsgemäßen Kühlsystems dazu eingerichtet, den Betrieb des flugzeugexternen Lufterzeugungsaggregats in Abhängigkeit der von der Erfassungseinrichtung bereitgestellten Signale derart zu steuern, dass die Temperatur und/oder der Massenstrom der von dem flugzeugexternen Lufterzeugungsaggregat bereitgestellten Luft an den Betriebszustand in dem flugzeugseitigen Luftverteilungssystem und/oder in der Mischkammer angepasst wird und/oder das flugzeugexterne Lufterzeugungsaggregat abgeschaltet wird. Eine Anpassung der Temperatur oder des Massenstroms der von dem flugzeugexternen Lufterzeugungsaggregat bereitgestellten Luft bietet sich beispielsweise an, wenn die Steuereinheit des erfindungsgemäßen Kühlsystems anhand der ihr von der Erfassungseinrichtung zugeführten Signale erkennt, dass der Betriebszustand in dem flugzeugseitigen Luftverteilungssystem und/oder in der Mischkammer lediglich in einem gewissen Ausmaß von einem Soll-Betriebszustand abweicht. Eine Abschaltung des flugzeugexternen Lufterzeugungsaggregats kann dagegen dann angezeigt sein, wenn der Betriebszustand in dem flugzeugseitigen Luftverteilungssystem und/oder in der Mischkammer sehr stark von einem Soll-Betriebszustand abweicht, oder sich gar einem kritischen Betriebszustand annähert. Eine Abschaltung des flugzeugexternen Lufterzeugungsaggregats kann jedoch auch dann sinnvoll sein, wenn, beispielsweise aufgrund der Umgebungsbedingungen oder wenn in dem zu kühlenden Flugzeugbereich in bestimmen Betriebssituationen ein lediglich geringer Kühlleistungsbedarf vorliegt, seitens des erfindungsgemäßen Kühlsystems eine vernachlässigbar geringe oder keine Kühlleistungsanforderung an das flugzeugexterne Lufterzeugungsaggregat gestellt wird.

Die Erfassungseinrichtung des erfindungsgemäßen Systems zur Kühlung eines Flugzeugbereichs kann mindestens einen Temperatursensor umfassen. Ferner kann die Steuereinheit des erfindungsgemäßen Kühlsystems dazu eingerichtet sein, den Betrieb des flugzeugexternen Lufterzeugungsaggregats derart zu steuern, dass die Temperatur der von dem flugzeugexternen Lufterzeugungsaggregat bereitgestellten Luft erhöht wird oder das flugzeugexterne Lufterzeugungsaggregat abgeschaltet wird, wenn die Steuereinheit anhand der von der Erfassungseinrichtung bereitgestellten Signale erkennt, dass die Temperatur der Luft in dem flugzeugseitigen Luftverteilungssystem und/oder in der Mischkammer unterhalb eines unteren kritischen Schwellenwerts liegt. Der untere kritische Schwellenwert kann beispielsweise +2°C betragen. Durch eine derartige Steuerung des Betriebs des flugzeugexternen Lufterzeugungsaggregats kann das Vereisungsrisiko in dem flugzeugseitigen Luftverteilungssystem und/oder in der Mischkammer deutlich verringert werden.

Es versteht sich, dass die Steuereinheit des erfindungsgemäßen Kühlsystems auch dazu eingerichtet sein kann, den Betrieb des flugzeugexternen Lufterzeugungsaggregats derart zu steuern, dass die Temperatur der von dem flugzeugexternen Lufterzeugungsaggregat bereitgestellten Luft verringert wird, wenn die Steuereinheit anhand der von der Erfassungseinrichtung bereitgestellten Signale erkennt, dass die Temperatur der Luft in dem flugzeugseitigen Luftverteilungssystem und/oder in der Mischkammer oberhalb eines oberen kritischen Temperaturschwellenwerts liegt. Durch eine derartige Steuerung des Betriebs des flugzeugexternen Lufterzeugungsaggregats kann gewährleistet werden, dass das Kühlsystem von dem flugzeugexternen Lufterzeugungsaggregat stets mit ausreichend Kühlenergie versorgt wird.

Ferner kann die Erfassungseinrichtung des erfindungsgemäßen Kühlsystems mindestens einen Drucksensor umfassen. Die Steuereinheit kann dazu eingerichtet sein, den Betrieb des flugzeugexternen Lufterzeugungsaggregats derart zu steuern, dass der Massenstrom der von dem flugzeugexternen Lufterzeugungsaggregat bereitgestellten Luft verringert und/oder die Temperatur der von dem flugzeugexternen Lufterzeugungsaggregat bereitgestellten Luft erhöht wird oder das flugzeugexterne Lufterzeugungsaggregat abgeschaltet wird, wenn die Steuereinheit anhand der von der Erfassungseinrichtung bereitgestellten Signale erkennt, dass der Druck in dem flugzeugseitigen Luftverteilungssystem und/oder in der Mischkammer entweder unterhalb eines unteren kritischen Schwellenwerts oder oberhalb eines oberen kritischen Druckschwellenwerts liegt. Um den mittels des Drucksensors gemessenen Druck mit dem unteren bzw. dem oberen Druckschwellenwert zu vergleichen, kann die Steuereinheit Informationen über den von dem flugzeugexternen Lufterzeugungsaggregat bereitgestellten Kühlluftmassenstrom empfangen und verarbeiten. Diese Informationen können der Steuereinheit von dem flugzeugexternen Lufterzeugungsaggregat bereitgestellt werden. Ein unterhalb eines unteren kritischen Schwellenwerts liegender Druck kann als Indiz für eine Vereisung in einem bezogen auf die Strömungsrichtung der Luft durch das flugzeugseitige Luftverteilungssystem oder die Mischkammer stromaufwärts des Drucksensors liegenden Bereich des flugzeugseitigen Luftverteilungssystems oder der Mischkammer gewertet werden. In ähnlicher Weise kann ein oberhalb eines oberen kritischen Druckschwellenwerts liegender Druck als Indiz für eine Vereisung in einem bezogen auf die Strömungsrichtung der Luft durch das flugzeugseitige Luftverteilungssystem und/oder die Mischkammer stromabwärts des Drucksensors liegenden Bereich des flugzeugseitigen Luftverteilungssystems und/oder der Mischkammer gewertet werden.

Bei vergleichsweise geringfügigen Abweichungen des von dem Drucksensor gemessenen Druckwerts von dem unteren kritischen Druckschwellenwert oder dem oberen kritischen Druckschwellenwert kann es zur Beseitigung der Vereisung und der Vermeidung eines kritischen Betriebszustands in dem flugzeugseitigen Luftverteilungssystem und/oder der Mischkammer ausreichend sein, den Massenstrom der von dem flugzeugexternen Lufterzeugungsaggregat bereitgestellten Luft zu verringern und/oder die Temperatur der von dem flugzeugexternen Lufterzeugungsaggregat bereitgestellten Luft zu erhöhen. Wenn der von dem Drucksensor gemessene Druckwert jedoch weit unterhalb des unteren kritischen Druckschwellenwerts oder weit oberhalb des oberen kritischen Druckschwellenwerts liegt, kann es zur Vermeidung eines kritischen Betriebszustands in dem flugzeugseitigen Luftverteilungssystem und/oder der Mischkammer erforderlich sein, das flugzeugexterne Lufterzeugungsaggregat abzuschalten und damit die Zufuhr von Luft aus dem flugzeugexternen Lufterzeugungsaggregat in das Luftverteilungssystem des erfindungsgemäßen Kühlsystems zu unterbrechen. Ferner kann die Steuereinheit dazu eingerichtet sein, bei zwischen dem unteren kritischen Druckschwellenwert und dem oberen kritischen Druckschwellenwert liegenden gemessenen Druckwerten in dem flugzeugseitigen Luftverteilungssystem und/oder der Mischkammer den Betrieb des flugzeugexternen Lufterzeugungsaggregats, insbesondere den Massenstrom der vor dem flugzeugexternen Lufterzeugungsaggregat bereitgestellten Luft und/oder die Temperatur der von dem flugzeugexternen Lufterzeugungsaggregat bereitgestellten Luft derart zu steuern, dass der Druck in dem flugzeugseitigen Luftverteilungssystem und/oder in der Mischkammer einem optimierten Soll-Druckwert entspricht.

Die Messeinrichtung bzw. die Sensoren der Messeinrichtung können an beliebigen Positionen in dem flugzeugseitigen Luftverteilungssystem angeordnet sein. In Abhängigkeit der gewählten Position können dann aber ggf. mehrere Druck- und/oder Temperatursensoren erforderlich sein, um eine optimale Überwachung des Betriebzustands in dem flugzeugseitigen Luftverteilungssystem und/oder der Mischkammer zu gewährleisten. Da die in der Mischkammer vorherrschende Temperatur ebenso wie der in der Mischkammer vorherrschende Druck Rückschlüsse auf den Betriebszustand in Bereichen des flugzeugseitigen Luftverteilungssystems erlaubt, die bezogen auf die Strömungsrichtung der Luft durch das flugzeugseitige Luftverteilungssystem und die Mischkammer sowohl stromaufwärts als auch stromabwärts der Mischkammer liegen, ist es zur Minimierung der Anzahl der erforderlichen Sensoren der Messeinrichtung vorteilhaft, die Messeinrichtung bzw. die Sensoren der Messeinrichtung in der Mischkammer anzuordnen. Dadurch können die Kosten und die Komplexität des Kühlsystems ebenso wie das Systemgewicht verringert werden.

Die Steuereinheit des erfindungsgemäßen Systems zur Kühlung eines Flugzeugbereichs kann ferner dazu eingerichtet sein, von dem flugzeugexternen Lufterzeugungsaggregat bereitgestellte Signale zu empfangen und auszuwerten, die den Betriebszustand des flugzeugexternen Lufterzeugungsaggregats anzeigen. Die den Betriebszustand des flugzeugexternen Lufterzeugungsaggregats anzeigenden Signale können dann von der Steuereinheit bei der Steuerung des Betriebs des flugzeugexternen Lufterzeugungsaggregats berücksichtigt werden. Beispielsweise können die von dem flugzeugexternen Lufterzeugungsaggregat bereitgestellten Signale der Steuereinheit Informationen über den Massenstrom und/oder die Temperatur der von dem flugzeugexternen Lufterzeugungsaggregat bereitgestellten Luft liefern.

Die Steuereinheit des erfindungsgemäßen Kühlsystems kann mit einem Speicher verbunden sein, in dem Betriebsparameter des Systems hinterlegt sind. Der Speicher kann in die Steuereinheit integriert oder in Form eines separaten Speichers oder eines einer anderen Steuereinheit zugeordneten Speichers ausgebildet sein. Als in dem Speicher hinterlegte Betriebsparameter kommen insbesondere Parameter, wie z.B. ein maximal zulässiger Gesamtmassenstrom der von dem flugzeugexternen Lufterzeugungsaggregat bereitgestellten Luft, ein maximaler Systemdruck des flugzeugexternen Lufterzeugungsaggregats, eine minimale Temperatur der von dem flugzeugexternen Lufterzeugungsaggregat bereitgestellten Luft im Normalbetrieb, eine minimale Temperatur der von dem flugzeugexternen Lufterzeugungsaggregat bereitgestelltem Luft beim Vorliegen flugzeugseitiger Gerätefehler, etc. in Frage. Eine Steuereinheit, die auf derartige in einem Speicher hinterlegte Systembetriebsparameter zurückgreifen kann, kann dann dazu eingerichtet sein, den Betrieb des flugzeugexternen Lufterzeugungsaggregats in Abhängigkeit der in dem Speicher hinterlegten Systembetriebsparameter zur steuern, d.h. die in dem Speicher hinterlegten Systembetriebsparameter bei der Steuerung des flugzeugexternen Lufterzeugungsaggregats zu berücksichtigen

Die Steuereinheit des erfindungsgemäßen Kühlsystems ist vorzugsweise in Form einer elektronischen Steuereinheit ausgebildet. Die Steuereinheit kann eine flugzeugseitige Komponente des Systems bilden, d.h. zur Integration in einem Flugzeug vorgesehen sein. Alternativ dazu kann die Steuereinheit jedoch auch in Form einer separaten Komponente ausgebildet sein oder sogar eine Komponente des flugzeugexternen Lufterzeugungsaggregats bilden. Die Steuereinheit kann über entsprechende Datenleitungen mit der Erfassungseinrichtung sowie dem flugzeugexternen Lufterzeugungsaggregat verbunden sein. Alternativ dazu können die Steuereinheit, das flugzeugexterne Lufterzeugungsaggregat und die Erfassungseinrichtung auch so ausgeführt sein, dass eine kabellose Signal- und Datenübermittlung zwischen diesen Komponenten möglich ist.

Ein erfindungsgemäßes Verfahren zur Kühlung eines Flugzeugbereichs umfasst das Bereitstellen eines oben beschriebenen Systems zur Kühlung eines Flugzeugbereichs. Anschließend wird das Kühlsystem mit einem flugzeugexternen Lufterzeugungsaggregat verbunden. Der Betrieb des flugzeugexternen Lufterzeugungsaggregats wird mittels der Steuereinheit in Abhängigkeit der Signale gesteuert, die die Steuereinheit von der Erfassungseinrichtung zur Erfassung eines den Betriebszustand in dem flugzeugseitigen Luftverteilungssystem und/oder in der Mischkammer anzeigenden Parameters empfängt und auswertet.

Vorzugsweise steuert die Steuereinheit den Betrieb des flugzeugexternen Lufterzeugungsaggregats derart, dass die Temperatur und/oder der Massenstrom der von dem flugzeugexternen Lufterzeugungsaggregat bereitgestellten Luft an einen Betriebzustand in dem flugzeugseitigen Luftverteilungssystem und/oder in der Mischkammer angepasst wird und/oder das flugzeugexterne Lufterzeugungsaggregat abgeschaltet wird.

Wenn die Erfassungseinrichtung mindestens einen Temperatursensor umfasst, kann die Steuereinheit den Betrieb des flugzeugexternen Lufterzeugungsaggregats derart steuern, dass die Temperatur der von dem flugzeugexternen Lufterzeugungsaggregat bereitgestellten Luft erhöht wird oder das flugzeugexterne Lufterzeugungsaggregat abgeschaltet wird, wenn die Steuereinheit anhand der von der Erfassungseinrichtung bereitgestellten Signale erkennt, dass die Temperatur der Luft in dem flugzeugseitigen Luftverteilungssystem und/oder in der Mischkammer unterhalb eines unteren kritischen Temperaturschwellenwerts liegt.

Wenn die Erfassungseinrichtung alternativ oder zusätzlich dazu mindestens einen Drucksensor umfasst, kann die Steuereinheit den Betrieb des flugzeugexternen Lufterzeugungsaggregats derart steuern, dass der Massenstrom der von dem flugzeugexternen Lufterzeugungsaggregat bereitgestellten Luft verringert und/oder die Temperatur der von dem flugzeugexternen Lufterzeugungsaggregat bereitgestellten Luft erhöht wird oder das flugzeugexterne Lufterzeugungsaggregat abgeschaltet wird, wenn die Steuereinheit anhand der von der Erfassungseinrichtung bereitgestellten Signale erkennt, dass der Druck in dem flugzeugseitigen Luftverteilungssystem und/oder in der Mischkammer entweder unterhalb eines unteren kritischen Druckschwellenwerts oder oberhalb eines oberen kritischen Druckschwellenwerts liegt.

Ferner kann bei dem erfindungsgemäßen Verfahren zur Kühlung eines Flugzeugbereichs die Steuereinheit von dem flugzeugexternen Lufterzeugungsaggregat bereitgestellte Signale empfangen und auswerten, die den Betriebszustand des flugzeugexternen Lufterzeugungsaggregats anzeigen. Die den Betriebszustand des flugzeugexternen Lufterzeugungsaggregats anzeigenden Signale können dann von der Steuereinheit bei der Steuerung des Betriebs des flugzeugexternen Lufterzeugungsaggregats berücksichtigt werden.

Die Steuereinheit kann mit einem Speicher verbunden sein, in dem Betriebsparameter des Systems hinterlegt sind. Die Steuereinheit kann den Betrieb des flugzeugexternen Lufterzeugungsaggregats dann in Abhängigkeit der in dem Speicher hinterlegten System Betriebsparameter steuern.

Eine erfindungsgemäße Anordnung zur Kühlung eines Flugzeugbereichs umfasst ein oben beschriebenes System zur Kühlung eines Flugzeugbereichs sowie ein zur Verbindung mit dem Kühlsystem geeignetes flugzeugexternes Lufterzeugungsaggregat. Bevorzugte Ausführungsbeispiele der Erfindung werden nun anhand der beigefügten schematischen Zeichnungen näher erläutert, von denen
- Figur 1: ein erstes Ausführungsbeispiel eines Systems zur Kühlung eines Flugzeugbereichs zeigt,
- Figur 2: eine zweite Ausführungsform eines Systems zur Kühlung eines Flugzeugbereichs zeigt und
- Figur 3: eine dritte Ausführungsform eines Systems zur Kühlung eines Flugzeugbereichs zeigt.

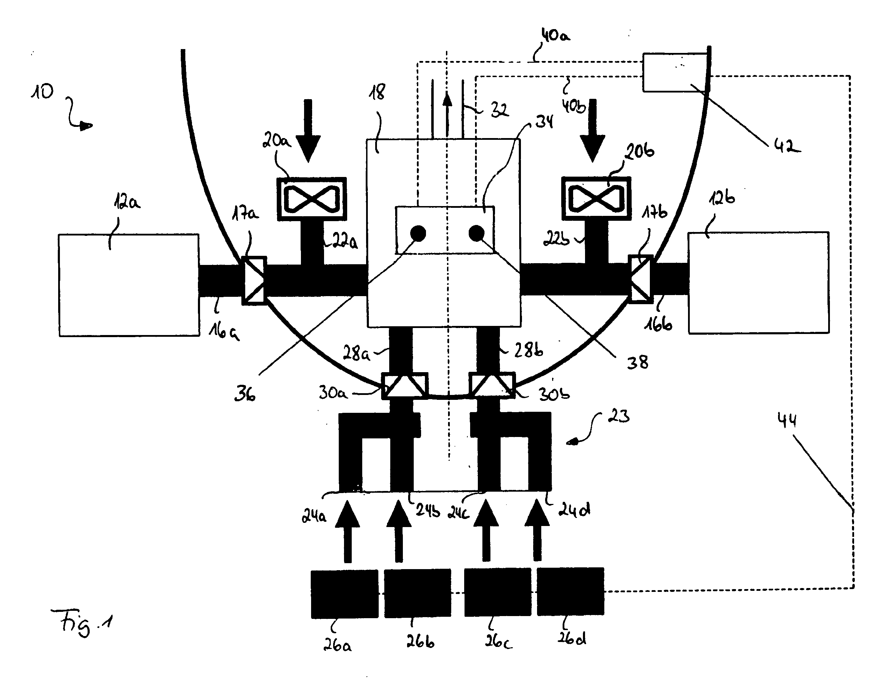

Ein in Figur 1 gezeigtes System 10 zur Kühlung eines Flugzeugbereichs umfasst zwei Klimaaggregate 12a, 12b, die jeweils in den Flügelwurzelbereichen eines Flugzeugs in einem unbedruckten Flugzeugbereich angeordnet sind. Die Klimaaggregate 12a, 12b stellen kühle Luft bereit und sind über entsprechende Luftverteilungsleitungen 16a, 16b mit einer Mischkammer 18 verbunden. In den Luftverteilungsleitungen 16a, 16b angeordnete Rückschlagventile 17a, 17b verhindern eine Rückströmung von der Mischkammer 18 zuzuführender Luft in die Klimaaggregate 12a, 12b. In der Mischkammer 18 wird die von den Klimaaggregaten 12a, 12b bereitgestellte Luft mit Umluft gemischt, die mit Hilfe von Umluftgebläsen 20a, 20b aus einem zu kühlenden Flugzeugbereich gesaugt wird. Die von den Umluftgebläsen 20a, 20b geförderte Luft wird über Verbindungsleitungen 22a, 22b zunächst in die Luftverteilungsleitungen 16a, 16b und von dort in die Mischkammer 18 geführt.

Das Kühlsystem 10 umfasst ferner ein flugzeugseitiges Luftverteilungssystem 23. Das flugzeugseitige Luftverteilungssystem 23 umfasst vier flugzeugseitige Anschlüsse 24a, 24b, 24c, 24d, die im Bereich einer Belly Fairing des Flugzeugs angeordnet und jeweils mit einem flugzeugexternen Niederdruck-Lufterzeugungsaggregat 26a, 26b, 26c, 26d verbunden sind. Je nach Bedarf können auch weniger als vier oder mehr als vier Anschlüsse 24a, 24b, 24c, 24d vorgesehen sein. Eine erste Einlassleitung 28a verbindet die Anschlüsse 24a, 24b mit der Mischkammer 18. In ähnlicher Weise verbindet eine zweite Einlassleitung 28b die Anschlüsse 24c, 24d mit der Mischkammer 18. In den Einlassleitungen 28a, 28b angeordnete Rückschlagventile 30a, 30b verhindern eine Rückströmung von der Mischkammer 18 zuzuführender Luft in Richtung der Anschlüsse 24a, 24b, 24c, 24d. Ferner umfasst das flugzeugseitige Luftverteilungssystem 23 eine Leitung 32, die die Mischkammer 18 mit dem zu kühlenden Flugzeugbereich verbindet.

Ferner umfasst das Kühlsystem 10 eine Erfassungseinrichtung 34 mit einem in der Mischkammer 18 angeordneten Temperatursensor 36 sowie einem ebenfalls in der Mischkammer 18 angeordneten Drucksensor 38. Die Sensoren 36, 38 der Erfassungseinrichtung 34 dienen dazu, die Temperatur und den Druck in der Mischkammer 18 zu messen. Von der Erfassungseinrichtung 34 bereitgestellte Signale werden über Datenleitungen 40a, 40b an eine elektronische Steuereinheit 42 übermittelt. Die elektronische Steuereinheit 42 ist dazu eingerichtet, die von der Erfassungseinrichtung 34 übermittelten Signale zu empfangen und auszuwerten und dadurch den Betriebszustand in dem flugzeugseitigen Luftverteilungssystem 23 und/oder in der Mischkammer 18 zu ermitteln. Ferner ist die elektronische Steuereinheit 42 über eine Datenleitung 44 mit den flugzeugexternen Lufterzeugungsaggregaten 26a, 26b, 26c, 26d verbunden. Falls gewünscht oder erforderlich, können die die elektronische Steuereinheit 42 mit der Erfassungseinrichtung 34 sowie den flugzeugexternen Lufterzeugungsaggregaten 26a, 26b, 26c, 26d verbindende Datenleitungen 40a, 40b, 44 auch durch kabellose Kommunikationswege ersetzt werden.

Die elektronische Steuereinheit 42 steuert den Betrieb der flugzeugexternen Lufterzeugungsaggregate 26a, 26b, 26c, 26d in Abhängigkeit der von der Erfassungseinrichtung 34 bereitgestellten Signale. Insbesondere ist die elektronische Steuereinheit 42 dazu eingerichtet, den Betrieb der flugzeugexternen Lufterzeugungsaggregate 26a, 26b, 26c, 26d in Abhängigkeit der von der Erfassungseinrichtung 34 bereitgestellten Signale derart zu steuern, dass die Temperatur und/oder der Massenstrom der von den flugzeugexternen Lufterzeugungsaggregaten 26a, 26b, 26c, 26d bereitgestellten Luft an den Betriebszustand in dem flugzeugseitigen Luftverteilungssystem 23 und/oder in der Mischkammer 18 angepasst wird und/oder das flugzeugexterne Lufterzeugungsaggregat 26a, 26b, 26c, 26d abgeschaltet wird.

Wenn der Temperatursensor 36 der Erfassungseinrichtung 34 in der Mischkammer 18 eine Temperatur erfasst, die unterhalb eines unteren kritischen Temperaturschwellenwerts von beispielsweise +2°C liegt, steuert die elektronische Steuereinheit 42 den Betrieb der flugzeugexternen Lufterzeugungsaggregate 26a, 26b, 26c, 26d derart, dass die Temperatur der von den flugzeugexternen Lufterzeugungsaggregaten 26a, 26b, 26c, 26d bereitgestellten Luft erhöht wird. Wenn die von dem Temperatursensor 36 der Erfassungseinrichtung 34 gemessenen Temperatur der Luft in dem flugzeugseitigen Luftverteilungssystem 23 und/oder in der Mischkammer 18 den unteren kritischen Temperaturschwellenwert sehr weit unterschreitet, kann die Steuerung der flugzeugexternen Lufterzeugungsaggregate 26a, 26b, 26c, 26d durch die elektronische Steuereinheit 42 auch das Abschalten der flugzeugexternen Lufterzeugungsaggregate 26a, 26b, 26c, 26d umfassen. Durch eine derartige Steuerung des Betriebs der flugzeugexternen Lufterzeugungsaggregate 26a, 26b, 26c, 26d werden Vereisungen in dem flugzeugseitigen Luftverteilungssystem 23 und/oder der Mischkammer 18 vermieden oder rasch beseitigt. Dies ist insbesondere vorteilhaft, wenn es sich bei den flugzeugexternen Lufterzeugungsaggregaten 26a, 26b, 26c, 26d um Aggregate handelt, die dazu in der Lage sind, Luft mit einer Temperatur unter 0°C zu erzeugen.

Wenn mit Hilfe des Drucksensors 38 der Erfassungseinrichtung 34 ein Druck in der Mischkammer 18 erfasst wird, der unterhalb eines unteren kritischen Druckschwellenwerts liegt, wertet die elektronische Steuereinheit 42 dies als Indiz für eine Vereisung in einem bezogen auf die Strömungsrichtung der Luft durch das flugzeugseitige Luftverteilungssystem 23 und die Mischkammer 18 stromaufwärts der Mischkammer 18 liegenden Bereich des flugzeugseitigen Luftverteilungssystems 23. Im Gegensatz dazu wertet die elektronische Steuereinheit 42 einen von dem Drucksensor 38 der Erfassungseinrichtung 34 erfassten, oberhalb eines oberen kritischen Druckschwellenwerts liegenden Druck als Indiz für eine Vereisung in einem bezogen auf die Strömungsrichtung der Luft durch das flugzeugseitige Verteilungssystem 23 und die Mischkammer 18 stromabwärts der Mischkammer 18, d.h. im Bereich der Leitung 32 liegenden Bereich des Luftverteilungssystems 23.

Die elektronische Steuereinheit 42 steuert den Betrieb der flugzeugexternen Lufterzeugungsaggregate 26a, 26b, 26c, 26d dann derart, dass der Massenstrom der von den flugzeugexternen Lufterzeugungsaggregaten 26a, 26b, 26c, 26d bereitgestellten Luft verringert und/oder die Temperatur der von den flugzeugexternen Lufterzeugungsaggregaten 26a, 26b, 26c, 26d bereitgestellten Luft erhöht wird. Wenn der von den Drucksensor 38 der Erfassungseinrichtung 34 gemessene Druckwert sehr stark unterhalb des unteren kritischen Druckschwellenwerts oder sehr stark oberhalb des oberen kritischen Druckschwellenwerts liegt, kann die Steuerung der flugzeugexternen Lufterzeugungsaggregate 26a, 26b, 26c, 26d durch die elektronische Steuereinheit 42 auch eine Abschaltung der flugzeugexternen Lufterzeugungsaggregate 26a, 26b, 26c, 26d vorsehen.

Die elektronische Steuereinheit 42 ist ferner dazu eingerichtet, Signale von den flugzeugexternen Lufterzeugungsaggregaten 26a, 26b, 26c, 26d zu empfangen und auszuwerten, die den Betriebszustand der flugzeugexternen Lufterzeugungsaggregate 26a, 26b, 26c, 26d anzeigen. Insbesondere empfängt die elektronische Steuereinheit 42 Signale, die den Massenstrom und die Temperatur der von den flugzeugexternen Lufterzeugungsaggregaten 26a, 26b, 26c, 26d bereitgestellten Luft anzeigen.

Die elektronische Steuereinheit 42 ist ferner mit einem integrierten Speicher versehen, in dem Betriebsparameter des Systems 10 hinterlegt ist. Zu den in dem Speicher der elektronischen Steuereinheit 42 hinterlegten Systembetriebsparametern gehören beispielsweise ein maximal zulässiger Gesamtmassenstrom der von den flugzeugexternen Lufterzeugungsaggregaten 26a, 26b, 26c, 26d bereitgestellten Luft, ein maximaler Systemdruck der flugzeugexternen Lufterzeugungsaggregate 26a, 26b, 26c, 26d, eine Minimaltemperatur der von den flugzeugexternen Lufterzeugungsaggregaten 26a, 26b, 26c, 26d bereitgestellten Luft im Normalbetrieb sowie eine minimale Temperatur der von den flugzeugexternen Lufterzeugungsaggregaten 26a, 26b, 26c, 26d bereitgestellten Luft unter Berücksichtigung von flugzeugseitigen Gerätefehlern. Die elektronische Steuereinheit 42 steuert den Betrieb der flugzeugexternen Lufterzeugungsaggregate 26a, 26b, 26c, 26d unter Berücksichtigung der in dem Speicher der Steuereinheit 42 hinterlegten Systembetriebsparameter.

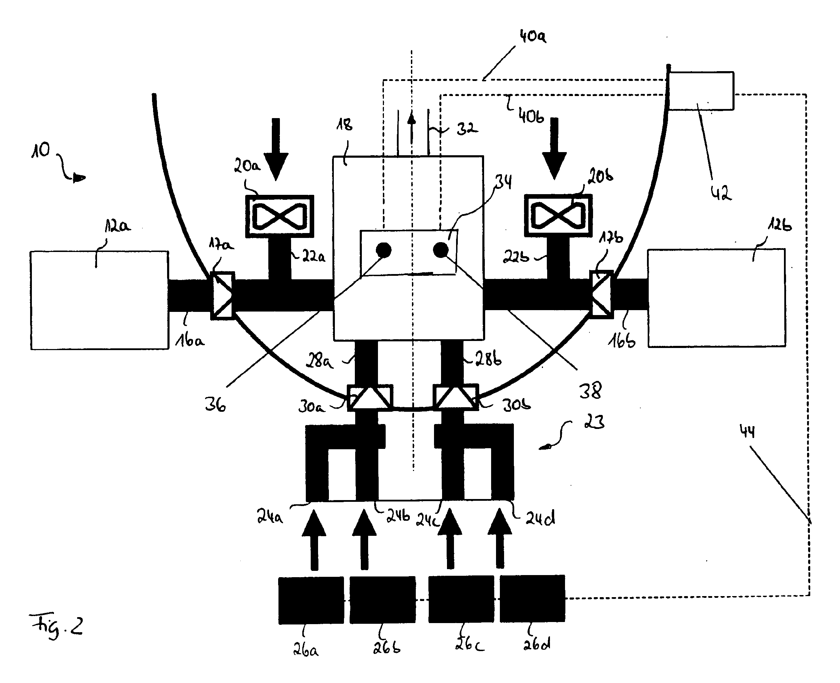

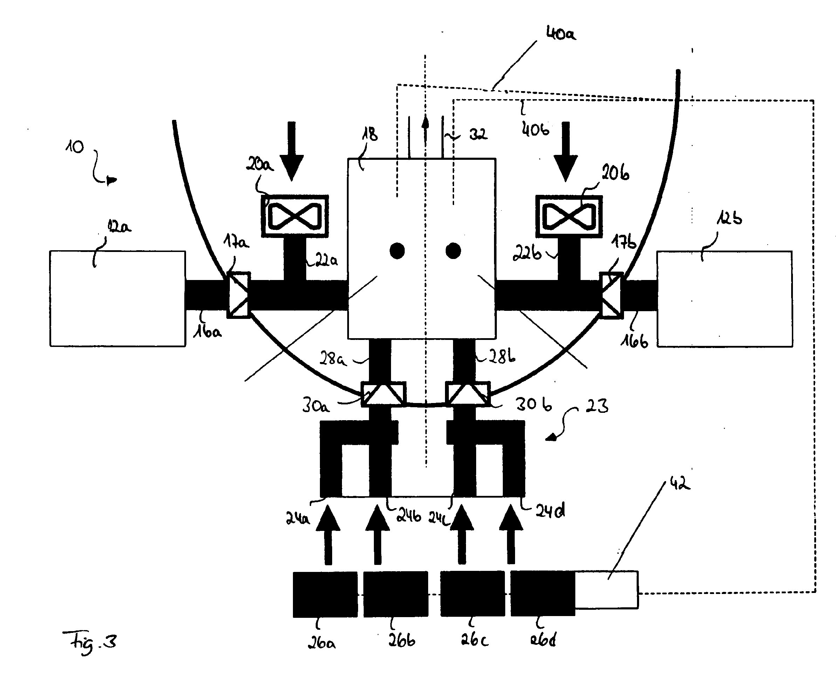

In der in Figur 1 gezeigten Anordnung bildet die elektronische Steuereinheit 42 eine flugzeugseitige Komponente des Kühlsystems 10 und ist im Inneren des Flugzeugs angeordnet. Bei der Anordnung gemäß Figur 2 ist die elektronische Steuereinheit 42 dagegen in Form einer separaten Komponente ausgebildet, die im Bodenbetrieb des Flugzeugs mit den flugzeugseitigen Komponenten des Kühlsystems 10 sowie den flugzeugexternen Lufterzeugungsaggregaten 26a, 26b, 26c, 26d verbunden ist. Schließlich zeigt Figur 3 eine Anordnung, bei der die elektronische Steuereinheit 42 eine Komponente des flugzeugexternen Lufterzeugungsaggregats 26d bildet. Im Übrigen entsprechen der Aufbau und die Funktionsweise der in den Figuren 2 und 3 veranschaulichten Anordnungen dem Aufbau und der Funktionsweise des Systems gemäß Figur 1.

## Patentansprüche

1. System (10) zur Kühlung eines Flugzeugbereichs mit:
- einer Mischkammer (18), die mit einem Klimaaggregat (12a, 12b) zur Bereitstellung von kühler Luft und/oder einer Umluftfördereinrichtung (20a, 20b) zur Zufuhr von Umluft in die Mischkammer (18) verbunden ist, und
- einem flugzeugseitigen Luftverteilungssystem (23), das mindestens eine die Mischkammer (18) mit dem zu kühlenden Flugzeugbereich verbindende Leitung (32) sowie mindestens eine Leitung (28a, 28b) umfasst, die mit einem flugzeugexternen Lufterzeugungsaggregat (26a, 26b, 26c, 26d) verbindbar ist, um von dem flugzeugexternen Lufterzeugungsaggregat (26a, 26b, 26c, 26d) bereitgestellte Luft in das flugzeugseitige Luftverteilungssystem (23) zu leiten,
**dadurch gekennzeichnet, dass** das System (10) eine Erfassungseinrichtung (34) zur Erfassung eines einen Betriebszustand in dem flugzeugseitigen Luftverteilungssystem (23) und/oder in der Mischkammer (18) anzeigenden Parameters sowie eine Steuereinheit (42) umfasst, die dazu eingerichtet ist, von der Erfassungseinrichtung (34) bereitgestellte Signale zu empfangen und auszuwerten und, wenn das System (10) mit dem flugzeugexternen Lufterzeugungsaggregat (26a, 26b, 26c, 26d) verbunden ist, den Betrieb des flugzeugexternen Lufterzeugungsaggregats (26a, 26b, 26c, 26d) in Abhängigkeit der von der Erfassungseinrichtung (34) bereitgestellten Signale zu steuern.

2. System zur Kühlung eines Flugzeugbereichs nach Anspruch 1,
**dadurch gekennzeichnet, dass** die Steuereinheit (42) dazu eingerichtet ist, den Betrieb des flugzeugexternen Lufterzeugungsaggregats (26a, 26b, 26c, 26d) in Abhängigkeit der von der Erfassungseinrichtung (34) bereitgestellten Signale derart zu steuern, dass die Temperatur und/oder der Massenstrom der von dem flugzeugexternen Lufterzeugungsaggregat (26a, 26b, 26c, 26d) bereitgestellten Luft an den Betriebszustand in dem flugzeugseitigen Luftverteilungssystem (23) und/oder in der Mischkammer (18) angepasst wird und/oder das flugzeugexterne Lufterzeugungsaggregat (26a, 26b, 26c, 26d) abgeschaltet wird.

3. System zur Kühlung eines Flugzeugbereichs nach Anspruch 1 oder 2,
**dadurch gekennzeichnet, dass** die Erfassungseinrichtung (34) mindestens einen Temperatursensor (36) umfasst und die Steuereinheit (42) dazu eingerichtet ist, den Betrieb des flugzeugexternen Lufterzeugungsaggregats (26a, 26b, 26c, 26d) derart zu steuern, dass die Temperatur der von dem flugzeugexternen Lufterzeugungsaggregat (26a, 26b, 26c, 26d) bereitgestellten Luft erhöht wird oder das flugzeugexterne Lufterzeugungsaggregat (26a, 26b, 26c, 26d) abgeschaltet wird, wenn die Steuereinheit (42) anhand der von der Erfassungseinrichtung (34) bereitgestellten Signale erkennt, dass die Temperatur der Luft in dem flugzeugseitigen Luftverteilungssystem (23) und/oder in der Mischkammer (18) unterhalb eines unteren kritischen Temperaturschwellenwerts liegt.

4. System zur Kühlung eines Flugzeugbereichs nach einem der Ansprüche 1 bis 3, **dadurch gekennzeichnet, dass** die Erfassungseinrichtung (34) mindestens einen Drucksensor (38) umfasst und die Steuereinheit (42) dazu eingerichtet ist, den Betrieb des flugzeugexternen Lufterzeugungsaggregats (26a, 26b, 26c, 26d) derart zu steuern, dass der Massenstrom der von dem flugzeugexternen Lufterzeugungsaggregat (26a, 26b, 26c, 26d) bereitgestellten Luft verringert und/oder die Temperatur der von dem flugzeugexternen Lufterzeugungsaggregat (26a, 26b, 26c, 26d) bereitgestellten Luft erhöht wird oder das flugzeugexterne Lufterzeugungsaggregat (26a, 26b, 26c, 26d) abgeschaltet wird, wenn die Steuereinheit (42) anhand der von der Erfassungseinrichtung (34) bereitgestellten Signale erkennt, dass der Druck in dem flugzeugseitigen Luftverteilungssystem (23) und/oder in der Mischkammer (18) entweder unterhalb eines unteren kritischen Druckschwellenwerts oder oberhalb eines oberen kritischen Druckschwellenwerts liegt.

5. System zur Kühlung eines Flugzeugbereichs nach einem der Ansprüche 1 bis 4, **dadurch gekennzeichnet, dass** die Erfassungseinrichtung (34) in der Mischkammer (18) angeordnet ist.

6. System zur Kühlung eines Flugzeugbereichs nach einem der Ansprüche 1 bis 4, **dadurch gekennzeichnet, dass** die Steuereinheit (42) dazu eingerichtet ist, von dem flugzeugexternen Lufterzeugungsaggregat (26a, 26b, 26c, 26d) bereitgestellte Signale zu empfangen und auszuwerten, die den Betriebszustand des flugzeugexternen Lufterzeugungsaggregats (26a, 26b, 26c, 26d) anzeigen.

7. System zur Kühlung eines Flugzeugbereichs nach einem der Ansprüche 1 bis 6, **dadurch gekennzeichnet, dass** die Steuereinheit (42) mit einem Speicher verbunden ist, in dem Betriebsparameter des Systems (10) hinterlegt sind und dass die Steuereinheit (42) dazu eingerichtet ist, den Betrieb des flugzeugexternen Lufterzeugungsaggregats (26a, 26b, 26c, 26d) in Abhängigkeit der in dem Speicher hinterlegten Betriebsparameter des Systems (10) zu steuern.

8. System zur Kühlung eines Flugzeugbereichs nach einem der Ansprüche 1 bis 7, **dadurch gekennzeichnet, dass** die Steuereinheit (42) eine flugzeugseitige Komponente des Systems (10) bildet, in Form einer separaten Komponente ausgebildet ist oder eine Komponente des flugzeugexternen Lufterzeugungsaggregats (26a, 26b, 26c, 26d) bildet.

9. Verfahren zur Kühlung eines Flugzeugbereichs mit den Schritten:
- Bereitstellen eines Systems (10) zur Kühlung eines Flugzeugbereichs nach einem der Ansprüche 1 bis 8,
- Verbinden des Systems (10) zur Kühlung eines Flugzeugbereichs mit einem flugzeugexternen Lufterzeugungsaggregat (26a, 26b, 26c, 26d), und
- Steuern des Betriebs des flugzeugexternen Lufterzeugungsaggregats (26a, 26b, 26c, 26d) mittels der Steuereinheit (42) in Abhängigkeit der Signale, die die Steuereinheit (42) von der Erfassungseinrichtung (34) zur Erfassung eines einen Betriebszustand in dem flugzeugseitigen Luftverteilungssystem (23) und/oder in der Mischkammer (18) anzeigenden Parameters empfängt und auswertet.

10. Verfahren zur Kühlung eines Flugzeugbereichs nach Anspruch 9,
**dadurch gekennzeichnet, dass** die Steuereinheit (42) den Betrieb des flugzeugexternen Lufterzeugungsaggregats (26a, 26b, 26c, 26d) derart steuert, dass die Temperatur und/oder der Massenstrom der von dem flugzeugexternen Lufterzeugungsaggregat (26a, 26b, 26c, 26d) bereitgestellten Luft an den Betriebszustand in dem flugzeugseitigen Luftverteilungssystem (23) und/oder in der Mischkammer (18) angepasst wird und/oder das flugzeugexterne Lufterzeugungsaggregat (26a, 26b, 26c, 26d) abgeschaltet wird.

11. Verfahren zur Kühlung eines Flugzeugbereichs nach Anspruch 9 oder 10,
**dadurch gekennzeichnet, dass** die Erfassungseinrichtung (34) mindestens einen Temperatursensor (36) umfasst und die Steuereinheit (42) den Betrieb des flugzeugexternen Lufterzeugungsaggregats (26a, 26b, 26c, 26d) derart steuert, dass die Temperatur der von dem flugzeugexternen Lufterzeugungsaggregat (26a, 26b, 26c, 26d) bereitgestellten Luft erhöht wird oder das flugzeugexterne Lufterzeugungsaggregat (26a, 26b, 26c, 26d) abgeschaltet wird, wenn die Steuereinheit (42) anhand der von der Erfassungseinrichtung (34) bereitgestellten Signale erkennt, dass die Temperatur der Luft in dem flugzeugseitigen Luftverteilungssystem (23) und/oder in der Mischkammer (18) unterhalb eines unteren kritischen Temperaturschwellenwerts liegt.

12. Verfahren zur Kühlung eines Flugzeugbereichs nach einem der Ansprüche 9 bis 11,
**dadurch gekennzeichnet, dass** die Erfassungseinrichtung (34) mindestens einen Drucksensor (38) umfasst und die Steuereinheit (42) den Betrieb des flugzeugexternen Lufterzeugungsaggregats (26a, 26b, 26c, 26d) derart steuert, dass der Massenstrom der von dem flugzeugexternen Lufterzeugungsaggregat (26a, 26b, 26c, 26d) bereitgestellten Luft verringert und/oder die Temperatur der von dem flugzeugexternen Lufterzeugungsaggregat (26a, 26b, 26c, 26d) bereitgestellten Luft erhöht wird oder das flugzeugexterne Lufterzeugungsaggregat (26a, 26b, 26c, 26d) abgeschaltet wird, wenn die Steuereinheit (42) anhand der von der Erfassungseinrichtung (34) bereitgestellten Signale erkennt, dass der Druck in dem flugzeugseitigen Luftverteilungssystem (23) und/oder in der Mischkammer (18) entweder unterhalb eines unteren kritischen Druckschwellenwerts oder oberhalb eines oberen kritischen Druckschwellenwerts liegt.

13. Verfahren zur Kühlung eines Flugzeugbereichs nach einem der Ansprüche 9 bis 12,
**dadurch gekennzeichnet, dass** die Steuereinheit (42) von dem flugzeugexternen Lufterzeugungsaggregat (26a, 26b, 26c, 26d) bereitgestellte Signale empfängt und auswertet, die den Betriebszustand des flugzeugexternen Lufterzeugungsaggregats (26a, 26b, 26c, 26d) anzeigen.

14. Verfahren zur Kühlung eines Flugzeugbereichs nach einem der Ansprüche 9 bis 13,
**dadurch gekennzeichnet, dass** die Steuereinheit (42) mit einem Speicher verbunden ist, in dem Betriebsparameter des Systems (10) hinterlegt sind und dass die Steuereinheit (42) den Betrieb des flugzeugexternen Lufterzeugungsaggregats (26a, 26b, 26c, 26d) in Abhängigkeit der in dem Speicher hinterlegten Betriebsparameter des Systems (10) steuert.

15. Anordnung zur Kühlung eines Flugzeugbereichs mit:
- einem System (10) zur Kühlung eines Flugzeugbereichs nach einem der Ansprüche 1 bis 8 und
- einem zur Verbindung mit dem System (10) geeigneten flugzeugexternen Lufterzeugungsaggregat (26a, 26b, 26c, 26d).

## Claims

1. System (10) for cooling an aircraft zone, with:
- a mixing chamber (18) which is connected to an air-conditioning unit (12a, 12b) for making cool air available and/or to a recirculated-air conveying device (20a, 20b) for supplying recirculated air into the mixing chamber (18), and
- an aircraft-side air-distribution system (23) which includes at least one line (32) connecting the mixing chamber (18) to the aircraft zone to be cooled and also at least one line (28a, 28b) that is connectable to an aircraft-external air-generating assembly (26a, 26b, 26c, 26d) in order to route air made available by the aircraft-external air-generating assembly (26a, 26b, 26c, 26d) into the aircraft-side air-distribution system (23),
**characterised in that** the system (10) includes a detection device (34) for detecting a parameter indicating an operating state in the aircraft-side air-distribution system (23) and/or in the mixing chamber (18) and also a control unit (42) which is set up to receive and evaluate signals made available by the detection device (34) and, when the system (10) is connected to the aircraft-external air-generating assembly (26a, 26b, 26c, 26d), to control the operation of the aircraft-external air-generating assembly (26a, 26b, 26c, 26d) in a manner depending on the signals made available by the detection device (34).

2. System for cooling an aircraft zone according to Claim 1,
**characterised in that** the control unit (42) is set up to control the operation of the aircraft-external air-generating assembly (26a, 26b, 26c, 26d) in dependence on the signals made available by the detection device (34) in such a manner that the temperature and/or the mass flow of the air made available by the aircraft-external air-generating assembly (26a, 26b, 26c, 26d) is/are adjusted to the operating state in the aircraft-side air-distribution system (23) and/or in the mixing chamber (18) and/or the aircraft-external air-generating assembly (26a, 26b, 26c, 26d) is switched off.

3. System for cooling an aircraft zone according to Claim 1 or 2,
**characterised in that** the detection device (34) includes at least one temperature sensor (36) and the control unit (42) is set up to control the operation of the aircraft-external air-generating assembly (26a, 26b, 26c, 26d) in such a manner that the temperature of the air made available by the aircraft-external air-generating assembly (26a, 26b, 26c, 26d) is increased or the aircraft-external air-generating assembly (26a, 26b, 26c, 26d) is switched off if the control unit (42) detects, on the basis of the signals made available by the detection device (34), that the temperature of the air in the aircraft-side air-distribution system (23) and/or in the mixing chamber (18) lies below a lower critical temperature threshold value.

4. System for cooling an aircraft zone according to one of Claims 1 to 3,
**characterised in that** the detection device (34) includes at least one pressure sensor (38) and the control unit (42) is set up to control the operation of the aircraft-external air-generating assembly (26a, 26b, 26c, 26d) in such a manner that the mass flow of the air made available by the aircraft-external air-generating assembly (26a, 26b, 26c, 26d) is reduced and/or the temperature of the air made available by the aircraft-external air-generating assembly (26a, 26b, 26c, 26d) is increased or the aircraft-external air-generating assembly (26a, 26b, 26c, 26d) is switched off if the control unit (42) detects, on the basis of the signals made available by the detection device (34), that the pressure in the aircraft-side air-distribution system (23) and/or in the mixing chamber (18) lies either below a lower critical pressure threshold value or above an upper critical pressure threshold value.

5. System for cooling an aircraft zone according to one of Claims 1 to 4,
**characterised in that** the detection device (34) is arranged in the mixing chamber (18).

6. System for cooling an aircraft zone according to one of Claims 1 to 4,
**characterised in that** the control unit (42) is set up to receive and evaluate signals made available by the aircraft-external air-generating assembly (26a, 26b, 26c, 26d) that indicate the operating state of the aircraft-external air-generating assembly (26a, 26b, 26c, 26d).

7. System for cooling an aircraft zone according to one of Claims 1 to 6,
**characterised in that** the control unit (42) is connected to a memory in which operating parameters of the system (10) are saved, and **in that** the control unit (42) is set up to control the operation of the aircraft-external air-generating assembly (26a, 26b, 26c, 26d) in a manner depending on the operating parameters of the system (10) saved in the memory.

8. System for cooling an aircraft zone according to one of Claims 1 to 7,
**characterised in that** the control unit (42) forms an aircraft-side component of the system (10), is designed in the form of a separate component, or forms a component of the aircraft-external air-generating assembly (26a, 26b, 26c, 26d).

9. Method for cooling an aircraft zone, with the following steps:
- providing a system for cooling an aircraft zone according to one of Claims 1 to 8,
- connecting the system (10) for cooling an aircraft zone to an aircraft-external air-generating assembly (26a, 26b, 26c, 26d), and
- controlling the operation of the aircraft-external air-generating assembly (26a, 26b, 26c, 26d) by means of the control unit (42) in dependence on the signals that the control unit (42) receives from the detection device (34) for detecting a parameter indicating an operating state in the aircraft-side air-distribution system (23) and/or in the mixing chamber (18) and evaluates.

10. Method for cooling an aircraft zone, according to Claim 9,
**characterised in that** the control unit (42) controls the operation of the aircraft-external air-generating assembly (26a, 26b, 26c, 26d) in such a manner that the temperature and/or the mass flow of the air made available by the aircraft-external air-generating assembly (26a, 26b, 26c, 26d) is/are adjusted to the operating state in the aircraft-side air-distribution system (23) and/or in the mixing chamber (18) and/or the aircraft-external air-generating assembly (26a, 26b, 26c, 26d) is switched off.

11. Method for cooling an aircraft zone, according to Claim 9 or 10,
**characterised in that** the detection device (34) includes at least one temperature sensor (36) and the control unit (42) controls the operation of the aircraft-external air-generating assembly (26a, 26b, 26c, 26d) in such a manner that the temperature of the air made available by the aircraft-external air-generating assembly (26a, 26b, 26c, 26d) is increased or the aircraft-external air-generating assembly (26a, 26b, 26c, 26d) is switched off if the control unit (42) detects, on the basis of the signals made available by the detection device (34), that the temperature of the air in the aircraft-side air-distribution system (23) and/or in the mixing chamber (18) lies below a lower critical temperature threshold value.

12. Method for cooling an aircraft zone, according to one of Claims 9 to 11,
**characterised in that** the detection device (34) includes at least one pressure sensor (38) and the control unit (42) controls the operation of the aircraft-external air-generating assembly (26a, 26b, 26c, 26d) in such a manner that the mass flow of the air made available by the aircraft-external air-generating assembly (26a, 26b, 26c, 26d) is reduced and/or the temperature of the air made available by the aircraft-external air-generating assembly (26a, 26b, 26c, 26d) is increased or the aircraft-external air-generating assembly (26a, 26b, 26c, 26d) is switched off if the control unit (42) detects, on the basis of the signals made available by the detection device (34), that the pressure in the aircraft-side air-distribution system (23) and/or in the mixing chamber (18) lies either below a lower critical pressure threshold value or above an upper critical pressure threshold value.

13. Method for cooling an aircraft zone, according to one of Claims 9 to 12,
**characterised in that** the control unit (42) receives and evaluates signals made available by the aircraft-external air-generating assembly (26a, 26b, 26c, 26d) that indicate the operating state of the aircraft-external air-generating assembly (26a, 26b, 26c, 26d).

14. Method for cooling an aircraft zone, according to one of Claims 9 to 13,
**characterised in that** the control unit (42) is connected to a memory in which operating parameters of the system (10) are saved, and **in that** the control unit (42) controls the operation of the aircraft-external air-generating assembly (26a, 26b, 26c, 26d) in a manner depending on the operating parameters of the system (10) saved in the memory.

15. Arrangement for cooling an aircraft zone, with
- a system (10) for cooling an aircraft zone, according to one of Claims 1 to 8, and
- an aircraft-external air-generating assembly (26a, 26b, 26c, 26d) that is suitable for connection to the system (10).

## Revendications

1. Système (10) de refroidissement d'une zone d'avion, comportant :
- une chambre de mélange (18) qui est reliée à une unité de climatisation d'air (12a, 12b) pour fournir de l'air frais et/ou à un dispositif de transport d'air ambiant (20a, 20b) pour amener l'air ambiant dans ladite chambre de mélange (18), et
- un système de distribution d'air (23) du côté avion qui comprend au moins une conduite (32) reliant la chambre de mélange (18) à la zone d'avion à refroidir ainsi qu'au moins une conduite (28a, 28b) qui peut être reliée à une unité de production d'air (26a, 26b, 26c, 26d) extérieure à l'avion pour amener l'air fourni par ladite unité de production d'air (26a, 26b, 26c, 26d) extérieure à l'avion dans ledit système de distribution d'air (23) du côté avion,
**caractérisé en ce que** le système (10) comporte un dispositif de détection (34) pour détecter un paramètre indiquant un état de fonctionnement dans le système de distribution d'air (23) du côté avion et/ou dans la chambre de mélange (18), ainsi qu'une unité de commande (42) qui est conçue pour recevoir et évaluer des signaux fournis par ledit dispositif de détection (34) et, lorsque le système (10) est relié à l'unité de production d'air (26a, 26b, 26c, 26d) extérieure à l'avion, pour commander le fonctionnement de l'unité de production d'air (26a, 26b, 26c, 26d) extérieure à l'avion en fonction des signaux fournis par le dispositif de détection (34).

2. Système de refroidissement d'une zone d'avion selon la revendication 1, **caractérisé en ce que** ladite unité de commande (42) est conçue pour commander le fonctionnement de l'unité de production d'air (26a, 26b, 26c, 26d) extérieure à l'avion en fonction des signaux fournis par le dispositif de détection (34) de telle sorte que la température et/ou le courant massique de l'air fourni par l'unité de production d'air (26a, 26b, 26c, 26d) extérieure à l'avion sont adaptés à l'état de fonctionnement dans le système de distribution d'air (23) du côté avion et/ou dans la chambre de mélange (18) et/ou l'unité de production d'air (26a, 26b, 26c, 26d) extérieure à l'avion est mise hors circuit.

3. Système de refroidissement d'une zone d'avion selon la revendication 1 ou 2, **caractérisé en ce que** le dispositif de détection (34) comporte au moins un capteur de température (36) et que l'unité de commande (42) est conçue pour commander le fonctionnement de l'unité de production d'air (26a, 26b, 26c, 26d) extérieure à l'avion de telle sorte que la température de l'air fourni par l'unité de production d'air (26a, 26b, 26c, 26d) extérieure à l'avion est augmenté ou que l'unité de production d'air (26a, 26b, 26c, 26d) extérieure à l'avion est mise hors circuit lorsque l'unité de commande (42) reconnaît sur la base des signaux fournis par le dispositif de détection (34) que la température de l'air dans le système de distribution d'air (23) du côté avion et/ou dans la chambre de mélange (18) se situe en dessous d'une valeur seuil inférieure critique.

4. Système de refroidissement d'une zone d'avion selon l'une des revendications 1 à 3,
**caractérisé en ce que** le dispositif de détection (34) comporte au moins un capteur de pression (38) et que l'unité de commande (42) est conçue pour commander le fonctionnement de l'unité de production d'air (26a, 26b, 26c, 26d) extérieure à l'avion de telle sorte que le courant massique de l'air fourni par l'unité de production d'air (26a, 26b, 26c, 26d) extérieure à l'avion est réduit et/ou la température de l'air fourni par l'unité de production d'air (26a, 26b, 26c, 26d) extérieure à l'avion est augmentée ou l'unité de production d'air (26a, 26b, 26c, 26d) extérieure à l'avion est mise hors circuit lorsque l'unité de commande (42) reconnaît sur la base des signaux fournis par le dispositif de détection (34) que la pression dans le système de distribution d'air (23) du côté avion et/ou dans la chambre de mélange (18) se situe soit au-dessous d'une valeur seuil inférieure critique, soit au-dessus d'une valeur seuil supérieure critique.

5. Système de refroidissement d'une zone d'avion selon l'une des revendications 1 à 4,
**caractérisé en ce que** le dispositif de détection (34) est disposé dans la chambre de mélange (18).

6. Système de refroidissement d'une zone d'avion selon l'une des revendications 1 à 4,
**caractérisé en ce que** l'unité de commande (42) est conçue pour recevoir et évaluer des signaux fournis par l'unité de production d'air (26a, 26b, 26c, 26d) extérieure à l'avion et indiquant l'état de fonctionnement de ce dernier.

7. Système de refroidissement d'une zone d'avion selon l'une des revendications 1 à 6,
**caractérisé en ce que** l'unité de commande (42) est reliée à une mémoire dans laquelle sont enregistrés des paramètres de fonctionnement du système (10) et que l'unité de commande (42) est conçue pour commander le fonctionnement de l'unité de production d'air (26a, 26b, 26c, 26d) extérieure à l'avion en fonction des paramètres de fonctionnement du système (10) enregistrés dans ladite mémoire.

8. Système de refroidissement d'une zone d'avion selon l'une des revendications 1 à 7,
**caractérisé en ce que** l'unité de commande (42) constitue un composant du côté avion du système (10), réalisé sous forme d'un composant séparé, ou constitue un composant de l'unité de production d'air (26a, 26b, 26c, 26d) extérieure à l'avion.

9. Procédé de refroidissement d'une zone d'avion comprenant les étapes suivantes :
- la mise à disposition d'un système (10) de refroidissement d'une zone d'avion selon l'une des revendications 1 à 8,
- la connexion du système (10) de refroidissement d'une zone d'avion à une unité de production d'air (26a, 26b, 26c, 26d) extérieure à l'avion, et
- la commande du fonctionnement de l'unité de production d'air (26a, 26b, 26c, 26d) extérieure à l'avion en fonction des signaux que l'unité de commande (42) reçoit du dispositif de détection (34) pour détecter un paramètre indiquant un état de fonctionnement dans le système de distribution d'air (23) du côté avion et/ou dans la chambre de mélange (18) avant de les évaluer.

10. Procédé de refroidissement d'une zone d'avion selon la revendication 9,
**caractérisé en ce que** l'unité de commande (42) commande le fonctionnement de l'unité de production d'air (26a, 26b, 26c, 26d) extérieure à l'avion de telle sorte que la température et/ou le courant massique de l'air fourni par l'unité de production d'air (26a, 26b, 26c, 26d) extérieure à l'avion sont adaptés à l'état de fonctionnement dans le système de distribution d'air (23) du côté avion et/ou dans la chambre de mélange (18)et/ou l'unité de production d'air (26a, 26b, 26c, 26d) extérieure à l'avion est mise hors circuit.

11. Procédé de refroidissement d'une zone d'avion selon la revendication 9 ou 10,
**caractérisé en ce que** le dispositif de détection (34) comporte au moins un capteur de température (36) et que l'unité de commande (42) commande le fonctionnement de l'unité de production d'air (26a, 26b, 26c, 26d) extérieure à l'avion de telle sorte que la température de l'air fourni par l'unité de production d'air (26a, 26b, 26c, 26d) extérieure à l'avion est augmentée ou que l'unité de production d'air (26a, 26b, 26c, 26d) extérieure à l'avion est mise hors circuit lorsque l'unité de commande (42), reconnaît sur la base des signaux fournis par le dispositif de détection (34) que la température de l'air dans le système de distribution d'air (23) du côté avion et/ou dans la chambre de mélange (18) se situe au-dessous d'une valeur seuil inférieure critique.

12. Procédé de refroidissement d'une zone d'avion selon l'une des revendications 9 à 11,
**caractérisé en ce que** le dispositif de détection (34) comporte au moins un capteur de pression (38) et que l'unité de commande (42) commande le fonctionnement de l'unité de production d'air (26a, 26b, 26c, 26d) extérieure à l'avion de telle sorte que le courant massique de l'air fourni par l'unité de production d'air (26a, 26b, 26c, 26d) extérieure à l'avion est réduit et/ou la température de l'air fourni par l'unité de production d'air (26a, 26b, 26c, 26d) extérieure à l'avion est augmentée ou l'unité de production d'air (26a, 26b, 26c, 26d) extérieure à l'avion est mise hors circuit lorsque l'unité de commande (42) reconnaît sur la base des signaux fournis par le dispositif de détection (34) que la pression dans le système de distribution d'air (23)du côté avion et/ou dans la chambre de mélange (18) se situe soit au-dessous d'une valeur seuil inférieure critique, soit au-dessus d'une valeur seuil supérieure critique.

13. Procédé de refroidissement d'une zone d'avion selon l'une des revendications 9 à 12,
**caractérisé en ce que** l'unité de commande (42) reçoit et évalue des signaux fournis par l'unité de production d'air (26a, 26b, 26c, 26d) extérieure à l'avion et indiquant l'état de fonctionnement de l'unité de production d'air (26a, 26b, 26c, 26d) extérieure à l'avion.

14. Procédé de refroidissement d'une zone d'avion selon l'une des revendications 9 à 13,
**caractérisé en ce que** l'unité de commande (42) est reliée à une mémoire dans laquelle sont enregistrés des paramètres de fonctionnement du système (10) et que l'unité de commande (42) commande le fonctionnement de l'unité de production d'air (26a, 26b, 26c, 26d) extérieure à l'avion en fonction des paramètres de fonctionnement du système (10) enregistrés dans la mémoire.

15. Dispositif de refroidissement d'une zone d'avion, comportant :
- un système (10) de refroidissement d'une zone d'avion selon l'une des revendications 1 à 8 et
- une unité de production d'air (26a, 26b, 26c, 26d) extérieure à l'avion appropriée pour être reliée au système (10).
